# FASCICULE DE BREVET EUROPEEN

(11) **EP 0 743 053 B1**
(45) Date de publication et mention de la délivrance du brevet: **17.01.2001**
(21) Numéro de dépôt: 96420164.4
(22) Date de dépôt: 06.05.1996
(51) Int. Cl.: A61G 5/10, B60B 37/10

(54) **Dispositif de sécurité et de contrôle du verrouillage d'un moyeu de roue, notamment pour fauteuils roulants**
Sicherheits- und Kontrollvorrichtung der Verriegelung einer Radnabe, insbesondere für Rollstuhl
Safety device for ensuring the locking of a wheel hub, especially for wheelchairs

(30) Priorité: 19.05.1995 FR 9506343
(43) Date de publication de la demande: 20.11.1996
(73) Titulaire: TECHNIQUE INDUSTRIE SERVICE, T.I.S. S.A., 42110 Feurs (FR)
(72) Inventeur: Masclet, Claude, Marclopt, 42210 Montrond les Bains (FR)
(74) Mandataire: Dupuis, François

(56) Documents cités:
- AU-B- 572 692
- FR-A- 2 671 312
- FR-A- 2 725 128
- GB-A- 1 141 067
- US-A- 4 887 826

## Description

L'invention se rattache au secteur technique des moyeux de roues notamment pour fauteuils roulants et, d'une manière plus générale, tous équipements de roues pouvant être rendus amovibles par rapport à leur structure support.

Il est connu de réaliser des moyeux de roues à démontage rapide par rapport à leur structure réceptrice pouvant être par exemple et, de manière non limitative, des fauteuils roulants. Ces moyeux de roues sont agencés avec un dispositif de verrouillage qui permet d'éviter le dégagement inopiné de la roue par rapport au châssis porteur.

De telles dispositions on notamment été décrites dans le brevet français n° 2725128, publié le 5 avril 1996.

On connaît par ailleurs par le brevet AU 572692 un dispositif de verrouillage / déverrouillage d'un moyeu de roue du type comprenant dans le corps du moyeu un ensemble à montage rapide sollicité à l'aide d'un poussoir pour être fixée à une structure porteuse.

Ces dispositifs de verrouillage et de déverrouillage font appel à des leviers ou manettes articulés par rapport à l'axe du moyeu et sont utilisés avec une grande fiabilité et sécurité.

Il s'avère néanmoins en pratique qu'ils peuvent être source d'accrochage extérieur, et que l'insuffisance de leur basculement en verrouillage peut permettre une sortie de moyeu en cas d'efforts ou de vibrations dus aux contraintes d'utilisation des véhicules roulants, sur lesquels ils s'adaptent.

En outre et même si les formes de levier ont été travaillées pour les rendre harmonieuses en s'intégrant dans l'esthétique d'ensemble, il n'en demeure pas moins que leur présence est disgracieuse. L'articulation du levier reste par ailleurs apparente et il peut se produire autour de celle-ci la formation de salissures dues à des projections extérieures pouvant être nuisibles au bon fonctionnement et à la présentation de l'ensemble. Il n'y a de plus aucun moyen de protection du levier précité.

A partir de ces constatations, la démarche du Demandeur a donc été d'examiner et de rechercher comment intégrer, dans le moyeu de roue, le dispositif de verrouillage en répondant de manière simple et satisfaisante à toutes les contraintes rencontrées précédemment.

Un but recherché selon l'invention a été d'incorporer à la fonction verrouillage du moyeu, un agencement et une forme qui satisfassent aux exigences de sécurité et de protection du dispositif de verrouillage/déverrouillage tout en répondant aux critères esthétiques, et en assurant les fonctions recherchées et notamment de préservation des mécanismes de déverrouillage-verrouillage.

Un autre but recherché selon l'invention, était d'éviter qu'en cas de manipulation inopinée du dispositif de verrouillage/déverrouillage, celui-ci puisse permettre l'enlèvement du moyeu.

Ces buts et d'autres encore ressortiront bien de la suite de la description.

Selon une première caractéristique, le dispositif de sécurité et de contrôle du verrouillage/déverrouillage d'un moyeu de roue notamment pour fauteuils roulants du type comprenant, dans le corps du moyeu, un ensemble à montage rapide sollicité axialement à l'aide d'un moyen poussoir pour être fixé par rapport à une structure porteuse, ledit moyen poussoir étant susceptible de coopérer avec l'axe du dispositif de verrouillage / déverrouillage à montage rapide, est remarquable en ce que le moyeu de roue présente, sur sa face opposée à sa zone de fixation, une cavité de grande profondeur permettant le positionnement d'un moyen à position fixe profilé sous forme d'une bague crantée, ce dernier autorisant le positionnement et/ou le guidage d'un moyen poussoir,
et en ce qu'un moyen mobile complémentaire sous forme d'un embout est déplaçable par rapport à la bague crantée en vue du contrôle pour l'intervention ou non sur le dispositif de verrouillage/déverrouillage du moyeu,
et en ce que la bague crantée présente des profils (12a) formant rampe, coopérant en position avec l'embout mobile rapporté et guidé par rapport au moyen poussoir solidaire de l'axe du dispositif à montage rapide, ledit embout étant orientable angulairement pour définir et autoriser une position d'intervention ou de non-intervention sur le dispositif de verrouillage ou déverrouillage du moyeu.

Ces caractéristiques et d'autres encore ressortiront bien de la suite de la description.

Pour fixer l'objet de l'invention illustré non limitativement aux figures des dessins où :

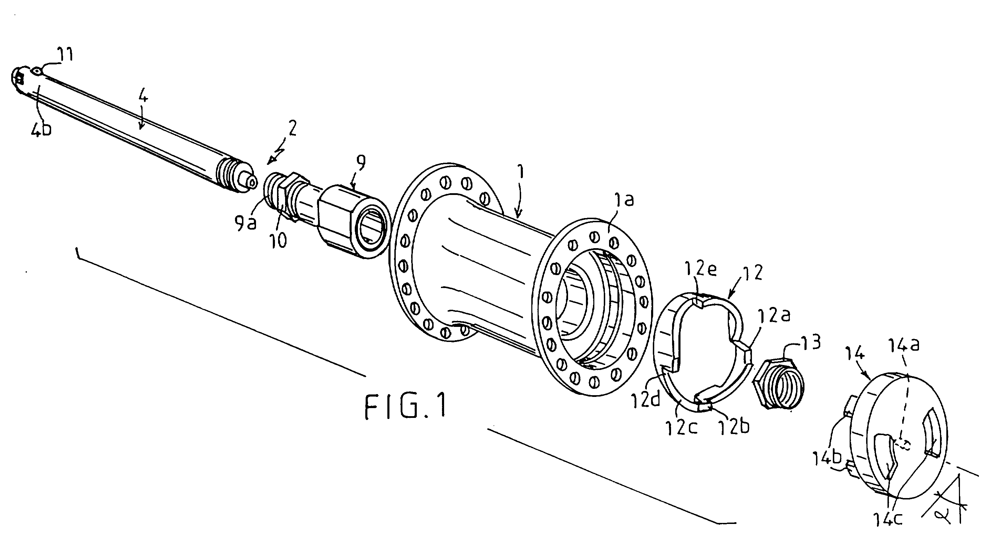

La figure 1 est vue du moyen de sécurité et de contrôle du dispositif de verrouillage/déverrouillage du moyeu, l'ensemble étant présenté dans une vue éclatée avant montage et selon une première mise en oeuvre.

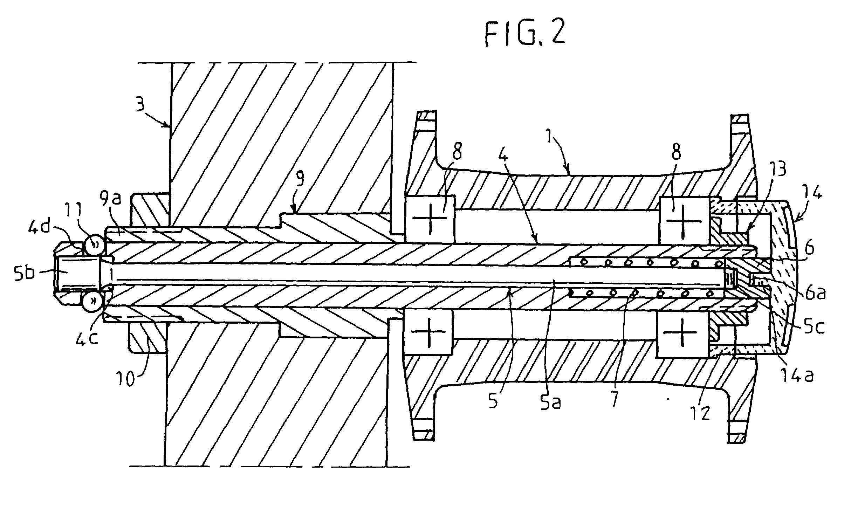

La figure 2 est une vue, selon la figure 1, en position montée et en coupe du dispositif de verrouillage selon l'invention en position verrouillage du moyeu.

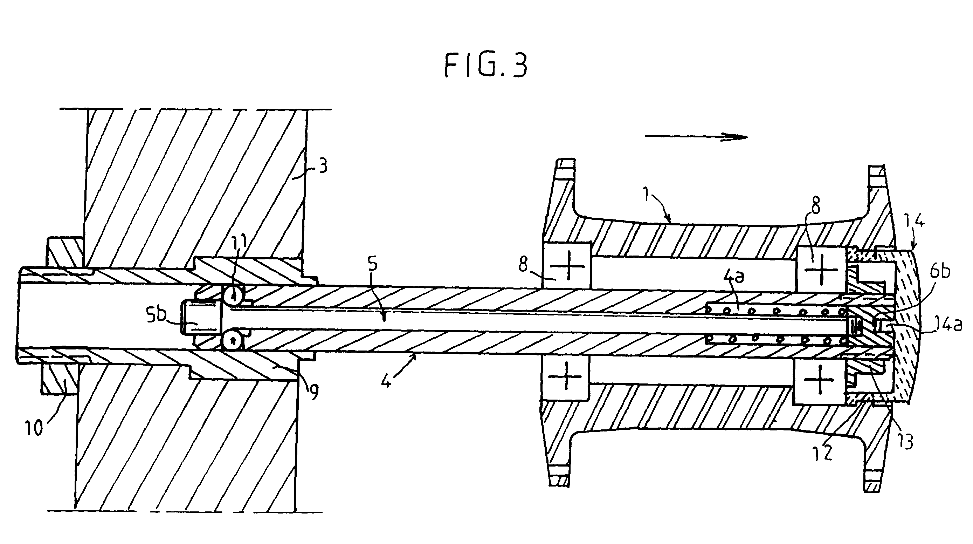

La figure 3 est une vue similaire à la figure 2 illustrant la phase de démontage du moyeu.

La figure 4 est une vue partielle et en coupe d'un autre dispositif de verrouillage qui ne fait pas partie de l'invention.

La figure 5 est une vue de face selon la figure 4.

Afin de rendre plus concret l'objet de l'invention, on le décrit maintenant d'une manière non limitative aux figures des dessins.

Le moyeu est référencé dans son ensemble par (1) et vient s'appliquer à l'aide d'un dispositif à montage rapide référencé par (2) sur une structure porteuse (3) pouvant être par exemple le châssis d'un fauteuil roulant. De manière connue, comme identifié par exemple dans le brevet français N. 2725128, le moyeu reçoit intérieurement un manchon cylindrique (4) susceptible de recevoir un axe (5) coulissant à l'intérieur de celui-ci à l'aide d'un moyen poussoir (6) agissant à l'encontre d'un ressort (7). Ce ressort est logé dans une cavité préétablie (4a) formée dans le manchon. Ledit manchon est monté en rotation, dans le corps de moyeu, par des moyens de roulement (8) convenablement disposés. L'extrémité (4b) du manchon (4) se prolonge au-delà dudit moyeu (1) pour venir s'engager dans une bague-support (9) épaulée intégrée sur la structure porteuse (3). Cette bague-support présente en bout un filetage (9a) permettant la réception d'un écrou de serrage (10) contre la structure porteuse. Le manchon (4) vient sensiblement dans le plan d'extrémité de la bague-support (9). L'axe (5) introduit dans le manchon présente sur sa longueur une section de petit diamètre (5a) prolongée, à son extrémité libre (5b), par une section de plus grand diamètre pénétrant dans un cavité (4c) appropriée du manchon. Ce dernier présente des ouvertures radiales (4d) permettant le positionnement de billes (11) qui, lorsque le moyen-poussoir (6) agit en provoquant le déplacement de l'axe (5), s'échappent sur ledit axe en permettant ainsi un retrait du manchon (4) et donc une libération du moyeu de roue (1) par rapport à la structure porteuse (3).

Selon l'invention, le moyen-poussoir (6) agissant sur l'axe (5) est établi sous forme d'une bague débordante qui est susceptible de coopérer avec le moyen de verrouillage proprement dit.

Plus particulièrement, dans une première mise en oeuvre, le moyeu (1) est établi avec une cavité profonde (1a) permettant le positionnement d'une bague crantée (12) qui vient en appui et fond de siège contre la cage extérieure du roulement (8). Cette bague crantée présente par exemple quatre profils saillants (12a) formant rampe, symétriques et orientés dans le même sens. Chaque profil en saillie présente une zone d'arrêt horizontale (12b) prolongée par la partie rampe (12c) de section dégressive jusqu'au bord annulaire (12d) de la bague crantée pour être adjacent ensuite avec la face verticale (12e) du profil saillant suivant.

Sur le manchon, est prévu un écrou (13) venant en appui sur la cage intérieure du roulement. Le moyen-poussoir (6) est monté solidaire de l'axe (5) par un agencement de parties filetée (5c) et taraudée (6a) complémentairesou autres. Le moyen-poussoir (6) présente sur sa face avant une ouverture (6b) permettant le positionnement d'un doigt (14a) solidaire et disposé dans la partie centrale intérieure d'un embout (14) formant disque. Ce dernier présente des pattes (14b) en nombre correspondant au nombre de profils en saillie (12a) établis sur la bague crantée (12). L'embout (14) présente une section diamétrale susceptible de permettre son engagement dans la cavité correspondante du moyeu afin de venir coopérer avec la bague crantée dans les conditions exposées ci-après. Cet embout assure différentes fonctions. Tout d'abord, il constitue le moyen de poussée manuelle par l'opérateur pour agir sur le verrouillage ou déverrouillage du moyeu de roue. En second lieu, il assure une fonction de protection et le cas échéant d'étanchéité à l'environnement extérieur de la cavité (1a) correspondante du moyeu et du roulement en regard. En troisième lieu et essentiellement, cedit embout permet, par son orientation angulaire (α), la mise en oeuvre du dispositif de verrouillage/déverrouillage du moyeu ou au contraire interdit toute manipulation et actionnement de ce dernier.

Cela est atteint par le fonctionnement et le positionnement de l'embout (14) par rapport à la bague crantée (12). L'embout est positionné et emmanché par clipsage de préférence dans la cavité du moyeu. La bague crantée qui se situe en fond de siège, dans ladite cavité, va, selon sa position, être en regard avec les pattes de l'embout, par ses parties en rampe de celles-ci. L'embout est susceptible d'une orientation angulaire (α) de 90° environ. Lorsque les pattes se situent en fond de gorge de la bague crantée, il est possible d'actionner l'embout et de le pousser axialement pour permettre la transmission de son déplacement par le moyen-poussoir (6) associée à la tige (5) permettant l'échappement des billes disposées en bout d'axe.

Pour assurer l'interdiction d'intervention et déverrouillage du moyeu, la rotation angulaire de l'embout, sur 90°, va permettre le positionnement de ses pattes en haut des rampes de la bague crantée assurant alors le blocage axial de cet embout. Ce dernier ne peut alors, par sa position, provoquer le déplacement de l'axe (5) et on obtient ainsi une impossibilité d'agir pour verrouiller ou déverrouiller le moyeu.

Dans cette mise en oeuvre extrêmement simple à réaliser, l'embout présentent des empreintes (14c) pour faciliter le positionnement des doigts ; l'opérateur peut très facilement positionner ledit embout pour verrouiller en position le dispositif assurant le démontage du moyeu. Accessoirement, cet embout qui forme disque est établi avec une face se trouvant en parfait prolongement de l'un des flasques du moyeu créant ainsi une esthétique nouvelle sans qu'il y ait de zone d'accrochage extérieur. Le montage est simple à réaliser. En outre l'embout permet éventuellement un marquage extérieur à des fins publicitaires ou autres. L'embout et la bague crantée sont avantageusement réalisés en un même matériau tel que matière plastique par exemple.

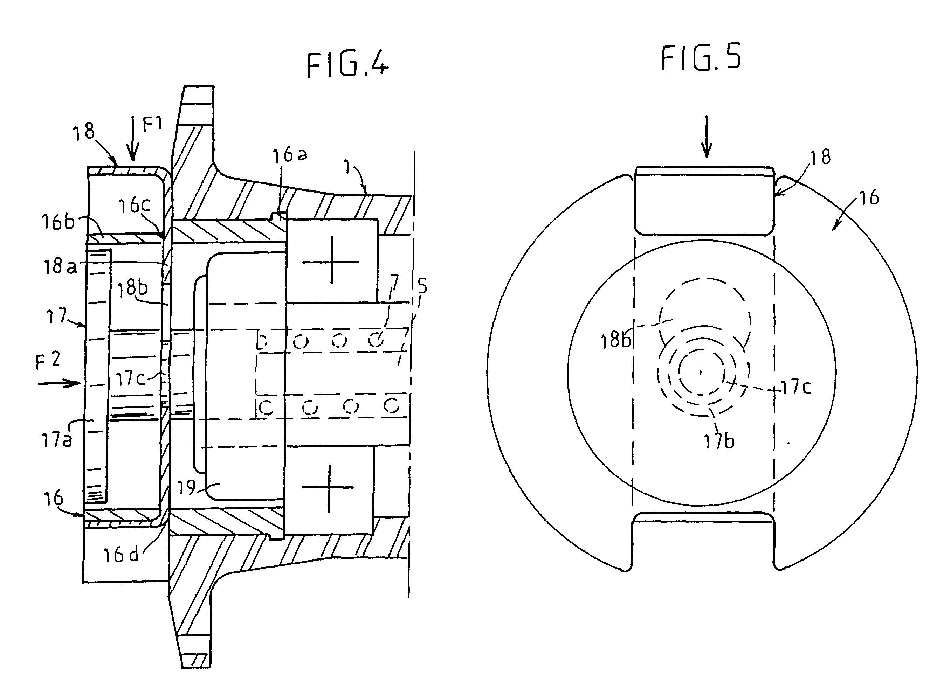

Les figures 4 et 5 présentent un exemple de dispositif de verrouillage qui ne fait pas partie de l'invention. Selon cet exemple, le corps de moyeu reçoit, dans sa cavité (1a), un corps cylindrique (16) de grande longueur susceptible de déborder de l'extérieur dudit moyeu. Ce corps (16) vient en appui par l'un de ses côtés (16a) contre la bague supérieure du roulement (8) intégré dans le moyeu. Il se prolonge vers l'avant par une section (16b) de diamètre plus réduit de façon à déterminer un plan étagé (16c) situé dans le prolongement du flasque correspondant extérieur du moyeu. Ce corps profilé permet le centrage d'un bouton-poussoir (17) accessible par l'opérateur qui présente un flasque circulaire (17a) prolongé par une portée cylindrique (17b). Celle-ci est montée et solidaire de l'extrémité de l'axe (5) en étant susceptible de provoquer le déplacement de ce dernier à l'encontre du ressort (7) du type précité. Dans cette réalisation, la portée (17b) du bouton-poussoir présente une gorge intérieure (17c). A partir de l'extrémité du corps (16), est prévue une coupelle (18) susceptible d'être déplacée radialement selon la flèche (F1). Cette coupelle présente un fond (18a) qui est positionné sur le corps (16) à travers une fente de passage (16d) de ce dernier. Il est prévu une ouverture centrale (18b) dans le fond de la coupelle dont le diamètre est sensiblement supérieur à la portée (17b) du bouton-poussoir. La coupelle est ainsi guidée en appui contre la portée (16c). Une bague d'arrêt (19) est solidaire du manchon (4) avec appui sur la cage intérieure du roulement (8). En phase de verrouillage du bouton-poussoir, ladite coupelle par son fond pénètre sensiblement dans la gorge (17c) empêchant le déplacement du bouton-poussoir selon la flèche (F2). Il y a donc dans ce cas-là impossibilité de déplacement du bouton-poussoir et donc de déverrouillage inopiné du moyeu par rapport à la structure porteuse. Le déplacement de la coupelle (18) selon la flèche (F1) libérant le bouton-poussoir va permettre à ce dernier d'être actionné par l'opérateur et agir axialement ainsi pour verrouiller ou déverrouiller le moyeu sur la la structure porteuse. Cette seconde réalisation du dispositif de contrôle et de sécurité est également facile à réaliser. Elle s'intègre dans la conception de la protection du bouton-poussoir.

Les avantages ressortent bien de l'invention. On souligne le nouveau concept et une meilleure sécurité dans le contrôle de verrouillage ou de déverrouillage ou de protection du mécanisme à bague crantée précité.

## Revendications

1. Dispositif de sécurité et de contrôle du verrouillage/déverrouillage d'un moyeu de roues notamment pour fauteuils roulants du type comprenant, dans le corps du moyeu (1), un ensemble à montage rapide sollicité axialement à l'aide d'un moyen poussoir (6) pour être fixé par rapport à une structure porteuse, ledit moyen poussoir étant susceptible de coopérer avec l'axe du dispositif de verrouillage / déverrouillage à montage rapide, caractérisé en ce que le moyeu de roue présente, sur sa face opposée à sa zone de fixation, une cavité (1) de grande profondeur permettant le positionnement d'un moyen à position fixe profilé sous forme d'une bague crantée (12), ce dernier autorisant le positionnement et/ou le guidage du moyen poussoir (6),
et en ce qu'un moyen mobile complémentaire (14) sous forme d'un embout est déplaçable par rapport à la bague crantée (12) en vue du contrôle pour l'intervention ou non sur le dispositif de verrouillage/déverrouillage du moyeu,
et en ce que la bague crantée (12) présente des profils (12a) formant rampe, coopérant en position avec l'embout (14) mobile rapporté et guidé par rapport au moyen poussoir (6) solidaire de l'axe du dispositif à montage rapide, ledit embout (14) étant orientable angulairement pour définir et autoriser une position d'intervention ou de non-intervention sur le dispositif de verrouillage ou déverrouillage du moyeu.

2. Dispositif selon la revendication 1, caractérisé en ce que la bague crantée (12) présente des profils saillants (12a) comprenant une partie horizontale (12b) haute prolongée par une forme en rampe (12c) de section dégressive jusqu'au rebord annulaire (12d) de la bague, une face de butée (12^{e}) limitant la rotation de l'embout.
Et en ce que ledit embout présente des pattes (14b) susceptibles de coopérer et s'ajuster en position sur les profils de la bague crantée.

3. Dispositif selon la revendication 2, caractérisé en ce que la face extérieure de l'embout (14) se situe dans le plan du flasque extérieur du moyeu, ledit embout présentant intérieurement et dans sa partie médiane, un doigt (14a) susceptible de s'engager sur le moyen poussoir (6)

4. Dispositif selon la revendication 3, caractérisé en ce que la face apparente extérieure de l'embout présente des empreintes (14c) pour faciliter son orientation.

## Patentansprüche

1. Sicherheits- und Kontrollvorrichtung der Verriegelung/Entriegelung einer Radnabe, insbesondere für Rollstühle, mit einem Nabengehäuse (1) und darin einer schnell montierbaren Baueinheit, die axial mit Hilfe einer Druckeinrichtung (6) gegenüber einer Tragestruktur befestigt wird, wobei die Druckeinrichtung geeignet ist, mit der Achse der schnell montierbaren Verriegelungs-/Entriegelungsvorrichtung zusammenzuwirken, dadurch gekennzeichnet, dass die Radnabe auf der dem Befestigungsbereich gegenüberliegenden Fläche eine tiefe Aushöhlung (1) für die Positionierung einer ortsfesten Einrichtung aufweist, die in Form eines gezahnten Rings (12) profiliert ist, wobei letzterer die Positionierung und/oder die Führung der Druckeinrichtung (6) ermöglicht,
und dass eine ergänzende bewegliche Einrichtung (14) in Form eines Aufsatzes zwecks Kontrolle für den eventuellen Eingriff an der Verriegelungs-/Entriegelungsvorrichtung der Nabe gegenüber dem gezahnten Ring (12) verschiebbar ist,
und dass der gezahnte Ring (12) Rampen bildende Profile (12a) aufweist, die in Position mit dem beweglichen Aufsatz (14) zusammenwirken, der angesetzt ist und gegenüber der mit der Achse der Schnellmontagevorrichtung fest verbundenen Druckeinrichtung (6) geführt wird, wobei der Aufsatz (14) winkelig ausrichtbar ist, um eine Eingriffs- bzw. Nichteingriffsposition an der Verriegelungs/Entriegelungsvorrichtung der Nabe zu definieren und zu ermöglichen.

2. Vorrichtung nach Anspruch 1, dadurch gekennzeichnet, dass der gezahnte Ring (12) vorspringende Profile (12a) mit einem oberen waagrechten Teil (12b) aufweist, der durch eine rampenartige Form (12c) mit degressivem Querschnitt bis zum ringförmigen Rand (12d) des Ringes verlängert wird, wobei eine Anschlagfläche (12e) die Drehung des Aufsatzes begrenzt,
und dass der Aufsatz Laschen (14b) aufweist, die geeignet sind, zusammenzuwirken und sich auf den Profilen des gezahnten Rings passgenau zu positionieren.

3. Vorrichtung nach Anspruch 2, dadurch gekennzeichnet, dass die Außenfläche des Aufsatzes (14) auf der Ebene der Außenwand der Nabe zu liegen kommt, wobei der Aufsatz innen und im mittleren Teil einen Stift (14a) aufweist, der geeignet ist, in die Druckeinrichtung (6) einzugreifen.

4. Vorrichtung nach Anspruch 3, dadurch gekennzeichnet, dass die äußere Stirnseite des Aufsatzes Vertiefungen (14c) für die leichtere Ausrichtung aufweist.

## Claims

1. Safety and checking device for the locking/unlocking of a wheel hub, particularly for wheelchairs, of the type comprising, in the body of the hub (1), a quick-fit assembly urged axially by a pushing means (6) to be fixed with respect to a bearing structure, the said pushing means being capable of collaborating with the axle of the quick-fit locking/unlocking device, characterized in that the wheel hub has, on its face opposite its fixing zone, a very deep cavity (1) allowing the positioning of a fixed position means profiled in the form of a notched ring (12), the latter allowing the positioning and/or guiding of the pushing means (6), and in that a complementary mobile means. (14) in the form of an end piece can move with respect to the notched ring (12) as a check on the intervention or otherwise on the hub locking/unlocking device, and in that the notched ring (12) has profiles (12a) forming a ramp, collaborating in position with the attached mobile end piece (14) and guided with respect to the pushing means (6) secured to the axle of the quick-fit device, the said end piece (14) being angularly orientable to define and allow a position of intervention or of non-intervention on the hub locking or unlocking device.

2. Device according to Claim 1, characterized in that the notched ring (12) has projecting profiles (12a) comprising a top horizontal part (12b) extended by a ramp shape (12c), the cross section of which diminishes down to the angular rim (12d) of the ring, a thrust face (12e) limiting the rotation of the end piece, and in that the said end piece has tabs (14b) capable of collaborating with and fitting in position onto the profiles of the notched ring.

3. Device according to Claim 2, characterized in that the outer face of the end piece (14) lies in the plane of the outer flange of the hub, the said end piece having, internally, and in its middle part, a finger (14a) capable of engaging in the pushing means (6).

4. Device according to Claim 3, characterized in that the visible exterior face of the end piece has recesses (14c) to make it easier to orientate.
